# EUROPEAN PATENT SPECIFICATION

(11) **EP 3 912 862 B1**
(45) Date of publication and mention of the grant of the patent: **14.05.2025**
(21) Application number: 21175409.8
(22) Date of filing: 21.05.2021
(51) Int. Cl.: B60Q 1/00, B60Q 1/28, B60Q 1/34, B60R 19/52, F21S 43/14, F21S 43/241, F21S 43/243, F21S 43/249, F21S 43/20, F21S 43/31, F21S 43/50, B60Q 1/26

(54) **VEHICLE LAMP AND HEADLAMP ASSEMBLY**
FAHRZEUGLAMPE UND SCHEINWERFERANORDNUNG
LAMPE DE VÉHICULE ET ENSEMBLE PHARE

(30) Priority: 21.05.2020 JP 2020088770
(43) Date of publication of application: 24.11.2021
(73) Proprietor: STANLEY ELECTRIC CO., LTD., Tokyo 153-8636 (JP)
(72) Inventor: SEKINE, Yusuke, Tokyo, 153-8636 (JP)
(74) Representative: Carstens, Dirk Wilhelm

(56) References cited:
- EP-A1- 3 190 333
- WO-A1-2014/135762
- DE-A1- 10 026 320
- DE-A1- 10 144 473
- DE-A1- 102011 119 372
- DE-A1- 102012 107 437
- GB-A- 2 554 403
- JP-A- 2015 209 104
- US-A1- 2005 152 141
- US-A1- 2013 021 815
- US-A1- 2019 061 646

## Description

### BACKGROUND

The present invention relates to vehicle lamps and headlamp assemblies and relates in particular to a vehicle lamp and a headlamp assembly capable of reducing the size of the light transmitting portion formed on an ornamental panel (e.g., a grille portion).

For example, German Patent Application No. DE 10 2013 008 908 discloses a vehicle lamp that includes a light-transmitting portion (e.g., an opening) formed in a grille (a grille frame), and as a light from an illumination device disposed in a housing is transmitted (or passes) through the light-transmitting portion, the light from the illumination device illuminates an area in a target direction without being blocked by the grille.

Attention is drawn to the document DE 10 026 320 A1. It describes a signal lamp having a light source and housing closed by an opaque wall with an aperture to allow passage of light. The opaque wall can be formed by the car's body or screen lining inside of the rear window. A lens focuses light to a point just beyond the aperture in the screen so that all light from the source passes through.

Attention is also drawn to the document DE 10 144 473 A1. It describes a lamp for vehicles with a lamp compartment, in which a light source installation is located for the generation of a signal function, containing a light source and with a glass covering the lamp compartment. The light source is located in a hollow of a rear wall that forms the rear side of the lamp compartment. Distanced from the light source, is a light deflection element, which has on one side facing the light source an optical accumulator zone. The light deflection element additionally has an optical scattering zone on a other side of the light source, by means of which the light beams can be deflected according to predetermined marginal conditions of light distribution of the signal function.

Further attention is drawn to the document WO 2014/135762. Here an indication device is intended to equip a vehicle and comprises i) a first set of at least two first light sources capable of generating first photons, ii) a flat light guide, capable of transferring first photons supplying a rear face to a front face with a view to transferring same outwards so as to perform a photometric function, iii) a second set of at least two second light sources capable of generating second photons at substantially the same time as the associated first light sources, and iv) an opaline screen located in the immediate proximity of the light guide and capable of distributing the second photons outwards so as to provide substantially uniform illumination contributing to the photometric function.

Finally, attention is drawn to the document EP 3 190 333. The document relates to an optical illumination or signaling unit for a motor vehicle comprising a housing, the peripheral edge of which supports an external cover glass; said housing contains a light comprising at least one light diode and a transparent light device comprising at least one light guide having an input surface for the light rays generated by said diode and an outlet front face located opposite said cover glass; said lamp further comprises a mask laterally surrounding at least a portion of said light guide, Said mask is made of an opal material.

### SUMMARY

With the vehicle lamp disclosed in German Patent Application No. DE 10 2013 008 908, however, the size of the light-transmitting portion formed in the grille needs to be increased in order to illuminate an area in a target direction with the brightness required by the law, but this is not desirable from the viewpoint of appearance (design).

The present invention has been made in view of such an issue and is directed to providing a vehicle lamp and a headlamp assembly capable of reducing the size of the light transmitting portion formed on an ornamental panel (e.g., a grille portion).

A vehicle lamp according to the present invention is defined in the attached independent claim. Preferred embodiments of the invention are defined in the dependent claims.

By this structure, it is possible to provide a vehicular lamp capable of reducing the size of the light transmitting portion formed in the ornamental panel. This can improve the appearance of the ornamental panel.

This is because, since the light from the light source is condensed by the lens, the size of the light transmitting portion of the decorative panel through which the light from the light source is transmitted can be made smaller corresponding to the light from the condensed light source, compared with the case where the light from the light source is not condensed.

In the vehicle lamp described above, the lens and the light source is disposed behind the non-light-transmitting portion of the ornamental panel. Thus, it is possible to prevent the lens and the light source from being visually recognized through the light transmission part in the front view. This can improve the appearance of the ornamental panel.

Moreover, in the vehicle lamp described above, the light source, the lens, and the light-transmitting portion are disposed in this order toward a front of the vehicle and inward in the vehicle-width direction. Thus, it is possible to suppress light from the light sources from being radiated toward the front of the vehicle. That is, in a front view, it is possible to prevent the ornamental panel (the light-transmitting portion) from being visually recognized as emitting light. This can improve the appearance of the ornamental panel.

Moreover, in the vehicle lamp described above, the light source includes a first light source configured to emit a light of a first color and a second light source configured to emit a light of a second color. Thus, two lamp functions (e.g., a turn lamp function and a position lamp function) can be realized.

Moreover, in the vehicle lamp described above, the lens includes a first light-entry portion configured to receive the light from the first light source, a first light-exit portion through which the light from the first light source that has entered through the first light-entry portion exits, a first light-guide portion configured to guide the light from the first light source that has entered through the first light-entry portion to the first light-exit portion and to cause the light to exit through the first light-exit portion, a second light-entry portion configured to receive the light from the second light source, a second light-exit portion through which the light from the second light source that has entered through the second light-entry portion exits, and a second light-guide portion configured to guide the light from the second light source that has entered through the second light-entry portion to the second light-exit portion and to cause the light to exit through the second light-exit portion, the first light-exit portion is configured to condense the light from the first light source that exits through the first light-exit portion with respect to the horizontal direction to a first focal point set between the first light-exit portion and the light-transmitting portion and the first light-exit portion is designed to allow the light exit through the first light-exit portion as a parallel light with respect to the vertical direction, and the second light-exit portion is configured to condense the light from the second light source that exits through the second light-exit portion with respect to the horizontal direction to a second focal point set between the second light-exit portion and the light-transmitting portion, and the second light-exit portion is designed to allow the light to exit through the second light-exit portion as a parallel light with respect to the vertical direction,
the first light-exit portion and the second light-exit portion are disposed adjacent to each other in the horizontal direction, and
the light-transmitting portion has a size corresponding to the light bundle from the first light source (41) condensed by the first light-exit portion (43b) and the size of the light bundle from the second light source (42) condensed by the second light-exit portion (43f).

Thus, two lamp functions (e.g., a turn lamp function and a position lamp function) can be realized.

Moreover, in the vehicle lamp described above, the ornamental panel may be a member that is physically separate from a grille main body attached to a front end of the vehicle.

Moreover, in the vehicle lamp described above, the ornamental panel may be attached to a headlamp assembly, the ornamental panel may be arranged at a position adjacent to the grille body by mounting the headlamp assembly to the front end of the vehicle.

Moreover, in the vehicle lamp described above, the ornamental panel may be formed integrally with a grille main body attached to a front end of the vehicle.

Moreover, in the vehicle lamp described above, the ornamental panel may be a grille portion constituting a grille along with a grille main body attached to a front end of the vehicle.

A headlamp assembly, not being part of the invention, comprises; an inward illuminating lamp configured to illuminate at least an area in front of a vehicle and inward in a vehicle-width direction; an outward illuminating lamp configured to illuminate at least an area in front of the vehicle and outward in the vehicle-width direction; a lamp configured to function as a headlamp; and an ornamental panel including a light-transmitting portion and a non-light-transmitting portion, wherein the inward illuminating lamp includes a lens disposed behind the ornamental panel, and a light source disposed behind the ornamental panel, the light source being configured to emit a light that is to be transmitted sequentially through the lens and the light-transmitting portion and that is to illuminate the area in front of the vehicle and inward in the vehicle-width direction, the lens is configured to condense the light from the light source that is transmitted through the lens, and the light-transmitting portion has a size corresponding to a size of the light from the light source that has been condensed by the lens.

By this structure, it is possible to provide a headlamp assembly capable of reducing the size of the light transmitting portion formed in the ornamental panel.

This is because, since the light from the light source is condensed by the lens, the size of the light transmitting portion of the decorative panel through which the light from the light source is transmitted can be made smaller corresponding to the light from the condensed light source, compared with the case where the light from the light source is not condensed.

According to the present invention, it is possible to provide a vehicle lamp capable of reducing the size of the light transmitting portion formed on an ornamental panel (e.g., a grille portion).

The above and other objects, features and advantages of the present invention will become more fully understood from the detailed description given hereinbelow and the accompanying drawings which are given by way of illustration only, and thus are not to be considered as limiting the present invention, the scope of the invention being defined by the appended claims.

### BRIEF DESCRIPTION OF DRAWINGS

Fig. 1 is a perspective view of the headlamp assembly 10.
Fig. 2 is a front view of a vehicle V provided with the headlamp assembly 10.
Fig. 3 is an exploded perspective view of the headlamp assembly 10.
Fig. 4 is a sectional view taken along the A-A line indicated in Fig. 2.
Fig. 5 illustrates an example of an illumination range of the inward illuminating lamp 40 and an illumination range of the outward illuminating lamp 50.
Fig. 6A is a perspective view of the inner lens 43 as viewed from the front side.
Fig. 6B is a front view of the inner lens 43.
Fig. 6C is a perspective view of the inner lens 43 as viewed from the back side.
Fig. 6D is a rear view of the inner lens 43.
Fig. 7 is an enlarged view of the area enclosed by the circle in Fig. 4.
Fig. 8A is a perspective view of the outward illuminating lamp 50.
Fig. 8B is a diagram (a schematic diagram) of an optical path of a light guided in the outward illuminating lamp 50.
Fig. 9A illustrates some modification examples of the headlamp assembly 10.
Fig. 9B illustrates some modification examples of the headlamp assembly 10.

### DESCRIPTION OF EMBODIMENTS

Hereinafter, a headlamp assembly 10 that includes a vehicle lamp (an inward illuminating lamp 40) according to an embodiment of the present invention will be described with reference to the appended drawings. In the drawings, corresponding constituent elements are given identical reference characters, and duplicate descriptions thereof will be omitted.

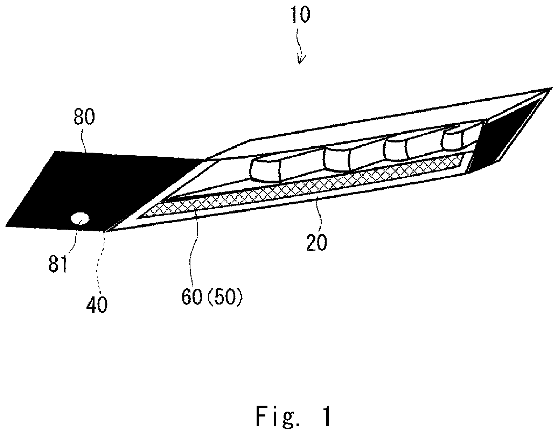

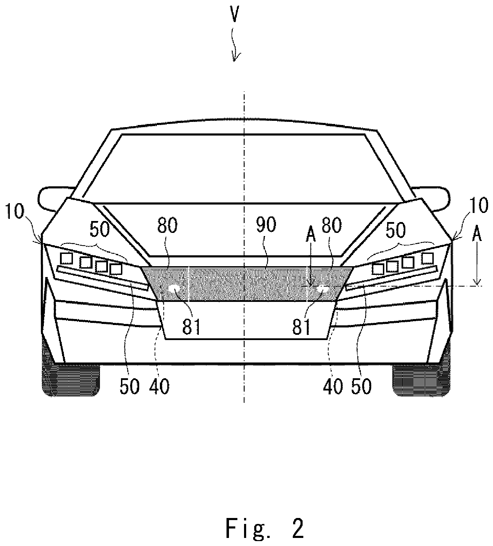

Fig. 1 is a perspective view of the headlamp assembly 10, and Fig. 2 is a front view of a vehicle V provided with the headlamp assembly 10.

As illustrated in Fig. 2, the headlamp assembly 10 is provided on each of the right and left sides of a front end of the vehicle V, such as an automobile. The headlamp assemblies 10 provided on the right and left sides have horizontally symmetric configurations. Therefore, only the headlamp assembly 10 provided on the left side of the front end of the vehicle V (the left-hand side as facing forward from the vehicle) will be described below as a representative example.

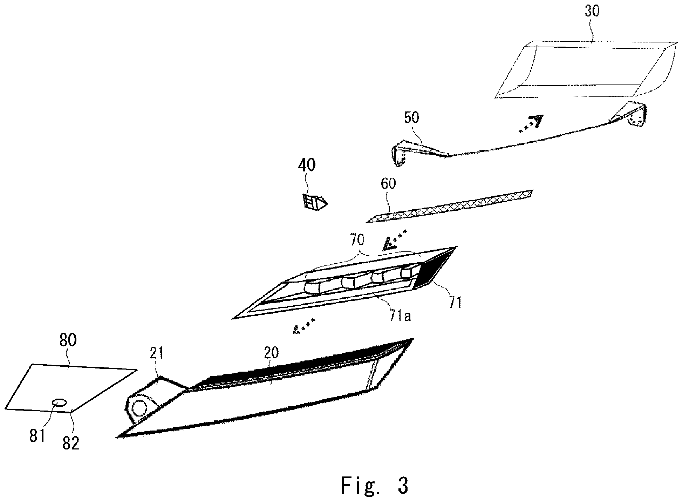

Fig. 3 is an exploded perspective view of the headlamp assembly 10.

As illustrated in Fig. 3, the headlamp assembly 10 includes an outer lens 20, a housing 30, a first lamp (the inward illuminating lamp 40 and an outward illuminating lamp 50) that functions as a position lamp and as a turn lamp, an inner lens 60, a second lamp 70 that functions as a headlamp, and a grille end portion 80.

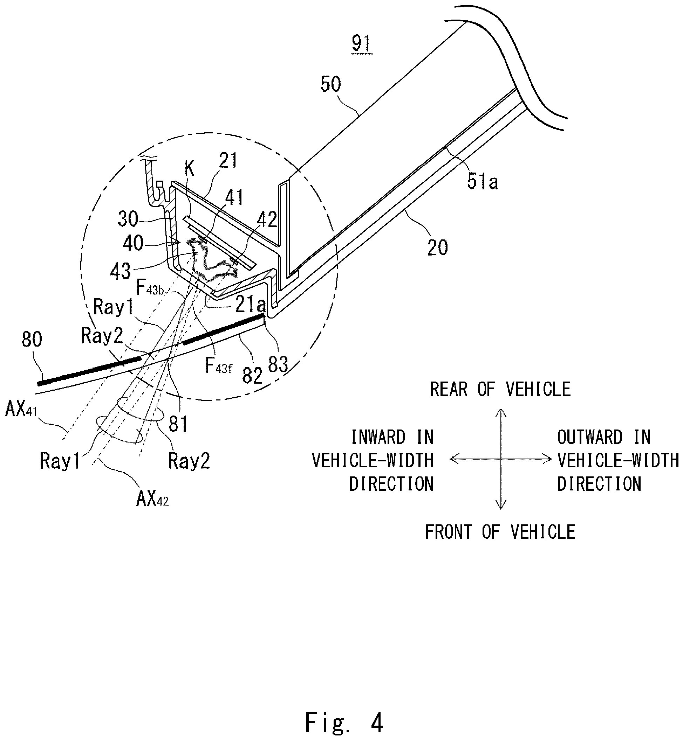

Although not illustrated, for example, the inward illuminating lamp 40, the inner lens 60, the second lamp 70, and the grille end portion 80 are attached to the outer lens 20. Meanwhile, the outward illuminating lamp 50 is attached to the housing 30. The headlamp assembly 10 illustrated in Fig. 1 is formed by combining the outer lens 20 and the housing 30 to which the aforementioned components attached thereto. The inward illuminating lamp 40, the outward illuminating lamp 50, the inner lens 60, and the second lamp 70 are disposed in a lamp room 91 (see Fig. 4) formed by the outer lens 20 and the housing 30.

Fig. 4 is a sectional view taken along the A-A line indicated in Fig. 2.

The outer lens 20 is a light-transmissive cover made of a transparent resin, such as acryl or polycarbonate. A headlamp assembly 10 is attached to the front end of the vehicle V (see Fig. 2). At this time, as shown in FIG 4, the outer lens 20 is disposed in a state inclined rearward from the inside toward the outward in the vehicle width direction.

As illustrated in Figs. 1 and 4, the grille end portion 80 is attached to the outer lens 20. The grille end portion 80 is an example of an ornamental panel or a grille portion according to the present disclosure. The grille end portion 80 is a member physically separate from a grille main body 90 (see Fig. 2).

First, a configuration example of the grille main body 90 will be described.

The grille main body 90 is, for example, a panel (an ornamental panel provided mainly for decorative purpose) made of a synthetic resin. As illustrated in Fig. 2, the grille main body 90 is attached to the front end of the vehicle V. Specifically, the grille main body 90 is attached, of the front end of the vehicle V, to an area between the right and left headlamp assemblies 10 provided on the front end of the vehicle V. The grille main body 90 does not include an air passage through which the air for cooling the radiator and so on passes.

Next, a configuration example of the grille end portion 80 will be described.

The grille end portion 80 is, for example, a panel (an ornamental panel provided mainly for decorative purpose) made of a synthetic resin. The grille end portion 80 is attached to the outer lens 20 (e.g., the inward end of the outer lens 20 in the vehicle-width direction). For example, the grille end portion 80 is attached such that the front surface of the grille end portion 80 and the front surface of the outer lens 20 are smoothly continuous (see Fig. 4) without any step.

The grille end portion 80 is located at a position adjacent to the grille main body 90 in a state that the headlamp assembly 10 is attached to the front end of the vehicle V (see Fig. 2).
The grille main body 90 and the grille end portion 80 located at a position adjacent to the grille main body 90 are visually recognized as one grill.

The grille end portion 80 includes a light-transmitting portion 81 through which light irradiated from the inward illuminating lamp 40 is transmitted and a non-light-transmitting portion 82 through which the light is not transmitted. The grill end portion 80 can be formed, for example, by masking a portion of the transparent resin panel corresponding to the light-transmitting portion 81 and painting the other portions with an opaque color (e.g., black). Alternatively, the grille end portion 80 can be formed by forming a through-hole in a portion corresponding to the light-transmitting portion 81 with respect to the opaque resin panel (For example, a black panel). The through-hole may be closed by a light-transmitting portion such as a transparent resin.

An accommodating portion 21 in which the inward illuminating lamp 40 is housed is disposed behind the grille end portion 80. The accommodating portion 21 is provided, for example, on the outer lens 20 (e.g., the inward end of the outer lens 20 in the vehicle-width direction). The accommodating portion 21 is provided with a light-transmitting portion 21a through which light emitted from the inward illuminating lamp 40 disposed in the accommodating portion 21 passes.

Next, a configuration example of the inward illuminating lamp 40 will be described.

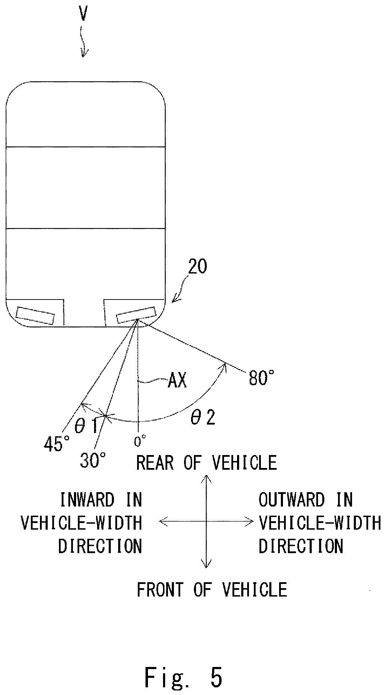

Fig. 5 illustrates an example of an illumination range of the inward illuminating lamp 40 and an illumination range of the outward illuminating lamp 50.

As illustrated in Fig. 5, the inward illuminating lamp 40 illuminates a range θ1 in front of the vehicle and inward in the vehicle-width direction. The inward illuminating lamp 40 is an example of a vehicle lamp according to the present disclosure.

As illustrated in Fig. 4, the inward illuminating lamp 40 is disposed behind the grille end portion 80. Specifically, the inward illuminating lamp 40 is disposed behind the non-light-transmitting portion 82 of the grille end portion 80 in a state of being housed in the accommodating portion 21 provided in the outer lens 20. The non-light-transmitting portion 82 is, for example, a portion of the grill end portion 80 between the light-transmitting portion 81 and an outer end 83 of the grill end portion 80 in the vehicle-width direction.

The inward illuminating lamp 40 includes a turn lamp light source 41, a position lamp light source 42, and an inner lens 43. The turn lamp light source 41 is an example of a first light source according to the present disclosure, the position lamp light source 42 is an example of a second light source according to the present disclosure, and the inner lens 43 is an example of a lens according to the present disclosure. The set of the light sources 41 and 42, the inner lens 43, and the light-transmitting portion 81 of the grille end portion 80 are disposed in this order toward the front of the vehicle and inward in the vehicle-width direction.

The turn lamp light source 41 and the position lamp light source 42 are both mounted on the same surface of a substrate K with a predefined gap provided therebetween in the horizontal direction.

The turn lamp light source 41 is a semiconductor light-emitting element, such as an LED, that emits an amber light. The turn lamp light source 41 has an emission surface (e.g., a rectangular emission surface that measures 1 mm on each side). An optical axis AX₄₁ of the turn lamp light source 41 passes through the center of the emission surface of the turn lamp light source 41 and extends in a direction orthogonal to the emission surface.

The position lamp light source 42 is a semiconductor light-emitting element, such as an LED, that emits a white light. The position lamp light source 42 has an emission surface (e.g., a rectangular emission surface that measures 1 mm on each side). An optical axis AX₄₂ of the position lamp light source 42 passes through the center of the emission surface of the position lamp light source 42 and extends in a direction orthogonal to the emission surface. The optical axis AX₄₁ of the turn lamp light source 41 and the optical axis AX₄₂ of the position lamp light source 42 are parallel to each other.

The light sources 41 and 42 are disposed in the accommodating portion 21 in such a state that their light emission surfaces are inclined so as to face the vehicle front and the vehicle width direction inward.

The inner lens 43 is disposed in front of the light sources 41 and 42.

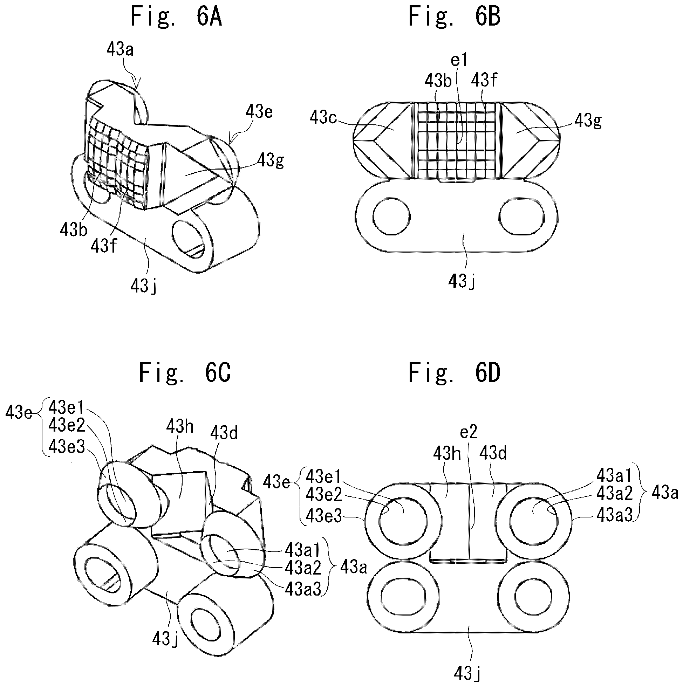

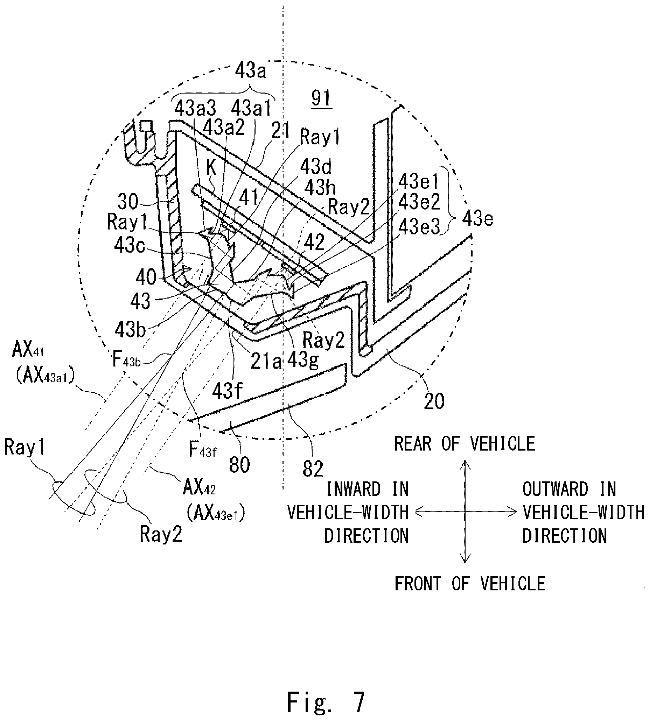

Fig. 6A is a perspective view of the inner lens 43 as viewed from the front side; Fig. 6B is a front view of the inner lens 43; Fig. 6C is a perspective view of the inner lens 43 as viewed from the back side; and Fig. 6D is a rear view of the inner lens 43. Fig. 7 is an enlarged view of the area enclosed by the circle in Fig. 4.

The inner lens 43 is made of a transparent resin, such as acryl or polycarbonate. As shown in Figs. 6 and 7, the inner lens 43 has a first light-entry portion 43a in which light from the turn lamp light source 41 enters and a first light-exit portion 43b in which light from the turn lamp light source 41 emits light, a first total-reflection surface 43c, and a second total-reflection surface 43d. The first total-reflection surface 43c, and the second total-reflection surface 43d totally reflect the light from the turn lamp light source 41 that has entered the inner lens 43 from the first light-entry portion 43a toward the first light-exit portion 43b. The first total-reflection surface 43c and the second total-reflection surface 43d constitute an example of a first light-guide portion according to the present disclosure.

Further, the inner lens 43 has a second light-entry portion 43e in which light from the position lamp light source 42 enters and a second light-exit portion 43f, in which light from the position lamp light source 42 emits light, a third total-reflection surface 43g, and a fourth total-reflection surface 43h. The third total-reflection surface 43g, and the fourth total-reflection surface 43h totally reflect the light from the position lamp light source 42 that has entered the inner lens 43 from the second light-entry portion 43e toward the second light-exit portion 43f. The third total-reflection surface 43g and the fourth total-reflection surface 43h constitute an example of a second light-guide portion according to the present disclosure.

The first light-entry portion 43a is disposed in front of the turn lamp light source 41. The first light-entry portion 43a collimates the light from the turn lamp light source 41 that enters the inner lens 43 through the first light-entry portion 43a.

As illustrated in Fig. 7, the first light-entry portion 43a includes, for example, a center light-entry surface 43a1, a tubular peripheral light-entry surface 43a2, and a tubular peripheral reflection surface 43a3. The peripheral light-entry surface 43a2 extends from an outer periphery of the center light-entry surface 43a1 toward the turn lamp light source 41, and the peripheral reflection surface 43a3 is disposed outside the peripheral light-entry surface 43a2.

The center light-entry surface 43a1 is a lens surface having a shape that is rotationally symmetric about an optical axis AX₄₃ₐ₁ of the center light-entry surface 43a1, and the center light-entry surface 43a1 has a focal point. The turn lamp light source 41 is disposed at or in the vicinity of the focal point of the center light-entry surface 43a1 with the emission surface of the turn lamp light source 41 opposing the first light-entry portion 43a. At this point, the focal point of the center light-entry surface 43a1 is located at the center of the emission surface of the turn lamp light source 41. Moreover, the optical axis AX₄₁ of the turn lamp light source 41 coincides with the optical axis AX₄₃ₐ₁ of the center light-entry surface 43a1.

The peripheral reflection surface 43a3 is a paraboloidal total-reflection surface that is rotationally symmetric about the optical axis AX₄₃ₐ₁ of the center light-entry surface 43a1. The surface shape of the peripheral reflection surface 43a3 is designed such that the light from the turn lamp light source 41 that has entered through and been refracted at the peripheral light-entry surface 43a2 and been totally reflected by the peripheral reflection surface 43a3 is transformed (collimated) into a light that is parallel to the optical axis AX₄₃ₐ₁ of the center light-entry surface 43a1.

The first light-entry portion 43a is not limited to the above configuration, but may be any configuration as long as it can collimate light from the turn lamp light source 41.

The first total-reflection surface 43c is disposed in an optical path of the light from the turn lamp light source 41 that has entered through the first light-entry portion 43a. The first total-reflection surface 43c is, for example, a flat reflection surface and is disposed in a posture inclined 45 degrees relative to the optical axis of the first light-entry portion 43a (the optical axis AX₄₃ₐ₁ of the center light-entry surface 43a1) so that the light from the turn lamp light source 41 that has been totally reflected by the first total-reflection surface 43c travels outward in the vehicle-width direction (see Fig. 7).

The second total-reflection surface 43d is disposed in an optical path of the reflected light from the first total-reflection surface 43c. The second total-reflection surface 43d is, for example, a flat reflection surface and is disposed in a posture inclined 45 degrees relative to the entry direction of the reflected light from the first total-reflection surface 43c so that the reflected light from the first total-reflection surface 43c that is totally reflected by the second total-reflection surface 43d travels toward the first light-exit portion 43b (see Fig. 7).

The first light-exit portion 43b is configured to condense the light from the turn lamp light source 41 that is to exit through the first light-exit portion 43b (i.e., the reflected light from the second total-reflection surface 43d). The first light-exit portion 43b has a lens surface that has a focal point F_{43b} set between the first light-exit portion 43b and the light-transmitting portion 81 in order to condense the light from the turn lamp light source 41 that is to exit through the first light-exit portion 43b with respect to the horizontal direction, and the lens surface is also designed to allow the light from the turn lamp light source 41 that is to exit through the first light-exit portion 43b to exit as-is as a parallel light with respect to the vertical direction.

For example, as illustrated in Fig. 6A, the first light-exit portion 43b has a curved lens surface that projects toward a light-illuminating direction. The first light-exit portion 43b (the lens surface) illustrated in Fig. 6A is curved so as to project in the light-illuminating direction along both its horizontal section and its vertical section. This lens surface is divided in a lattice pattern so as to reduce the thickness of the first light-exit portion 43b (see Fig. 6B), and these divided surfaces are disposed in a saw-teeth pattern (in a step-like pattern) (see Fig. 6A). In other words, the first light-exit portion 43b (the lens surface) is configured like a Fresnel lens. It is to be noted that the configuration of the first light-exit portion 43b is not limited to the example described above. The first light-exit portion 43b may have any other configuration that can condense the light from the turn lamp light source 41 that is to exit through the first light-exit portion 43b with respect to the horizontal direction as well as allows the light from the turn lamp light source 41 that is to exit through the first light-exit portion 43b to exit as-is as a parallel light with respect to the vertical direction.

The second light-entry portion 43e is disposed in front of the position lamp light source 42 and collimates the light from the position lamp light source 42 that enters the inner lens 43 through the second light-entry portion 43e.

As illustrated in Fig. 7, the second light-entry portion 43e includes, for example, a center light-entry surface 43e1, a tubular peripheral light-entry surface 43e2, and a tubular peripheral reflection surface 43e3. The peripheral light-entry surface 43e2 extends from an outer periphery of the center light-entry surface 43e1 toward the position lamp light source 42, and the peripheral reflection surface 43e3 is disposed outside the peripheral light-entry surface 43e2.

The center light-entry surface 43e1 is a lens surface having a shape that is rotationally symmetric about an optical axis AX₄₃ₑ₁ of the center light-entry surface 43e1, and the center light-entry surface 43a1 has a focal point. The position lamp light source 42 is disposed at or in the vicinity of the focal point of the center light-entry surface 43e1 with the emission surface of the position lamp light source 42 opposing the second light-entry portion 43e. At this point, the focal point of the center light-entry surface 43e1 is located at the center of the emission surface of the position lamp light source 42. Moreover, the optical axis AX₄₂ of the position lamp light source 42 coincides with the optical axis AX₄₃ₑ₁ of the center light-entry surface 43e1.

The peripheral reflection surface 43e3 is a paraboloidal total-reflection surface that is rotationally symmetric about the optical axis AX₄₃ₑ₁ of the center light-entry surface 43e1. The surface shape of the peripheral reflection surface 43e3 is designed such that the light from the position lamp light source 42 that has entered through and been refracted at the peripheral light-entry surface 43e2 and been totally reflected by the peripheral reflection surface 43e3 is transformed (collimated) into a light that is parallel to the optical axis AX₄₃ₑ₁ of the center light-entry surface 43el.

The second light-entry portion 43e is not limited to the above configuration, but may be any configuration as long as it can collimate light from the position lamp light source 42.

The third total-reflection surface 43g is disposed in an optical path of the light from the position lamp light source 42 that has entered through the second light-entry portion 43e. The third total-reflection surface 43g is, for example, a flat reflection surface and is disposed in a posture inclined 45 degrees relative to the optical axis of the second light-entry portion 43e (the optical axis AX₄₃ₑ₁ of the center light-entry surface 43e1) so that the light from the position lamp light source 42 that has been totally reflected by the third total-reflection surface 43g travels inward in the vehicle-width direction (see Fig. 7).

The fourth total-reflection surface 43h is disposed in an optical path of the reflected light from the third total-reflection surface 43g. The fourth total-reflection surface 43h is, for example, a flat reflection surface and is disposed in a posture inclined 45 degrees relative to the entry direction of the reflected light from the third total-reflection surface 43g so that the reflected light from the third total-reflection surface 43g that is totally reflected by the fourth total-reflection surface 43h travels toward the second light-exit portion 43f (see Fig. 7).

The second light-exit portion 43f is configured to condense the light from the position lamp light source 42 that is to exit through the second light-exit portion 43f (i.e., the reflected light from the third total-reflection surface 43g). The second light-exit portion 43f has a lens surface that has a focal point F_{43f} set between the second light-exit portion 43f and the light-transmitting portion 81 in order to condense the light from the position lamp light source 42 that is to exit through the second light-exit portion 43f with respect o the horizontal direction, and the lens surface is also designed to allow the light from the position lamp light source 42 that is to exit through the second light-exit portion 43f to exit as-is as a parallel light with respect to the vertical direction.

For example, as illustrated in Fig. 6A, the second light-exit portion 43f has a curved lens surface that projects toward the light-illuminating direction. The second light-exit portion 43f (the lens surface) illustrated in Fig. 6A is curved so as to project in the light-illuminating direction along both its horizontal section and its vertical section. This lens surface is divided in a lattice pattern so as to reduce the thickness of the second light-exit portion 43f (see Fig. 6B), and these divided surfaces are disposed in a saw-teeth pattern (in a step-like pattern) (see Fig. 6A). In other words, the second light-exit portion 43f (the lens surface) is configured like a Fresnel lens. It is to be noted that the configuration of the second light-exit portion 43f is not limited to the example described above. The second light-exit portion 43f may have any other configuration that can condense the light from the position lamp light source 42 that is to exit through the second light-exit portion 43f with respect to the horizontal direction as well as allows the light from the position lamp light source 42 that is to exit through the second light-exit portion 43f to exit as-is as a parallel light with respect to the vertical direction.

As illustrated in Fig. 6B, the first light-exit portion 43b and the second light-exit portion 43f are disposed adjacent to each other in the horizontal direction. The reference e1 indicated in Fig. 6B denotes a border between the first light-exit portion 43b and the second light-exit portion 43f. The border e1 extends in the vertical direction (the up-down direction in Fig. 6B). In addition, as illustrated in Fig. 6D, the second total-reflection surface 43d and the fourth total-reflection surface 43h are disposed adjacent to each other in the horizontal direction. The reference e2 indicated in Fig. 6D denotes a border between the second total-reflection surface 43d and the fourth total-reflection surface 43h. The border e2 extends in the vertical direction (the up-down direction in Fig. 6D).

The inner lens 43 is configured to be symmetric with respect to a plane that includes the border e1 and the border e2. The first light-entry portion 43a, the first total-reflection surface 43c, the second total-reflection surface 43d, and the first light-exit portion 43b disposed on one side across the stated plane constitute a lens unit that controls the light from the turn lamp light source 41. Meanwhile, the second light-entry portion 43e, the third total-reflection surface 43g, the fourth total-reflection surface 43h, and the second light-exit portion 43f disposed on the other side across the stated plane constitute another lens unit that controls the light from the position lamp light source 42.

As described above, the inner lens 43 is configured to be symmetric with respect to the plane that includes the border e1 and the border e2. The inner lens 43 includes the first total-reflection surface 43c and the second total-reflection surface 43d that are each disposed in an inclined posture so as to totally reflect the light from the turn lamp light source 41 toward the first light-exit portion 43b, and the inner lens 43 also includes the third total-reflection surface 43g and the fourth total-reflection surface 43h that are each disposed in an inclined posture so as to totally reflect the light from the position lamp light source 42 toward the second light-exit portion 43f. Adopting such a configuration can keep the light from the turn lamp light source 41 from exiting through the second light-exit portion 43f even when the first light-exit portion 43b and the second light-exit portion 43f are disposed adjacent to each other in the horizontal direction. In addition, the above-described configuration can keep the light from the position lamp light source 42 from exiting through the first light-exit portion 43b.

As described above, as compared to a configuration in which neither the light from the turn lamp light source 41 nor the light from the position lamp light source 42 is condensed, a configuration in which the light from the turn lamp light source 41 and the light from the position lamp light source 42 are each condensed by the inner lens 43 (the first light-exit portion 43b and the second light-exit portion 43f) allows the size of the light-transmitting portion 81 of the grille end portion 80 through which the light from the turn lamp light source 41 and the light from the position lamp light source 42 are transmitted to be reduced in accordance with the condensed light from the turn lamp light source 41 and the condensed light from the position lamp light source 42.

Moreover, as described above, disposing the first light-exit portion 43b and the second light-exit portion 43f adjacent to each other in the horizontal direction (see Figs. 6B and 7) allows the focal point F_{43b} of the first light-exit portion 43b and the focal point F_{43f} of the second light-exit portion 43f to be located close to each other in the horizontal direction (see Fig. 7). This configuration can also help reduce the size of the light-transmitting portion 81 of the grille end portion 80 through which the light from the turn lamp light source 41 and the light from the position lamp light source 42 are transmitted.

The inner lens 43 configured as described above is disposed in front of the light sources 41 and 42. Specifically, the inner lens 43 is disposed in front of the light sources 41 and 42 with the first light-entry portion 43a opposing the turn lamp light source 41, with the second light-entry portion 43e opposing the position lamp light source 42, and with a screw (not illustrated) that penetrates through an attachment portion 43j (see Fig. 6) of the inner lens 43 fastened to the substrate K or the outer lens 20 (e.g., the accommodating portion 21).

The accommodating portion 21 (the light-transmitting portion 21a) is disposed in front of the first light-exit portion 43b and the second light-exit portion 43f. The light-transmitting portion 21a is, for example, a plate-like transparent portion and is disposed orthogonal to the optical axis AX₄₁ of the turn lamp light source 41 and the optical axis AX₄₂ of the position lamp light source 42.

In the inward illuminating lamp 40 configured as described above, upon the turn lamp light source 41 being turned on, a light Ray1 from the turn lamp light source 41 enters the inner lens 43 through the first light-entry portion 43a, as illustrated in Fig. 7. At this point, the light Ray1 from the turn lamp light source 41 is collimated by the first light-entry portion 43a into a light that is parallel to the optical axis AX₄₁ of the turn lamp light source 41. This collimated light Ray1 is totally reflected sequentially by the first total-reflection surface 43c and the second total-reflection surface 43d, is guided to the first light-exit portion 43b, and exits through the first light-exit portion 43b. At this point, the light Ray1 that exits through the first light-exit portion 43b is condensed by the first light-exit portion 43b with respect to the horizontal direction. Then, this condensed light Ray1 is transmitted through the light-transmitting portion 81 of the grille end portion 80 (see Fig. 4) and illuminates a range of the angle θ1 (see Fig. 5). The angle θ1 is a range of from 30 degrees inward to 45 degrees inward in the vehicle-width direction from a reference axis AX extending in the front-rear direction of the vehicle, as viewed from the above. It is to be noted that the angle θ1 is not limited to this range and may span any other range.

In a similar manner, in the inward illuminating lamp 40 configured as described above, upon the position lamp light source 42 being turned on, a light Ray2 from the position lamp light source 42 enters the inner lens 43 through the second light-entry portion 43e, as illustrated in Fig. 7. At this point, the light Ray2 from the position lamp light source 42 is collimated by the second light-entry portion 43e into a light that is parallel to the optical axis AX₄₂ of the position lamp light source 42. This collimated light Ray2 is totally reflected sequentially by the third total-reflection surface 43g and the fourth total-reflection surface 43h, is guided to the second light-exit portion 43f, and exits through the second light-exit portion 43f. At this point, the light Ray2 that exits through the second light-exit portion 43f is condensed by the second light-exit portion 43f with respect to the horizontal direction. Then, this condensed light Ray2 is transmitted through the light-transmitting portion 81 of the grille end portion 80 (see Fig. 4) and illuminates a range of the angle θ1 (see Fig. 5).

Next, a configuration example of the outward illuminating lamp 50 will be described.

As illustrated in Fig. 5, the outward illuminating lamp 50 illuminates mainly a range θ2 that lies in front of the vehicle and outward in the vehicle-width direction.

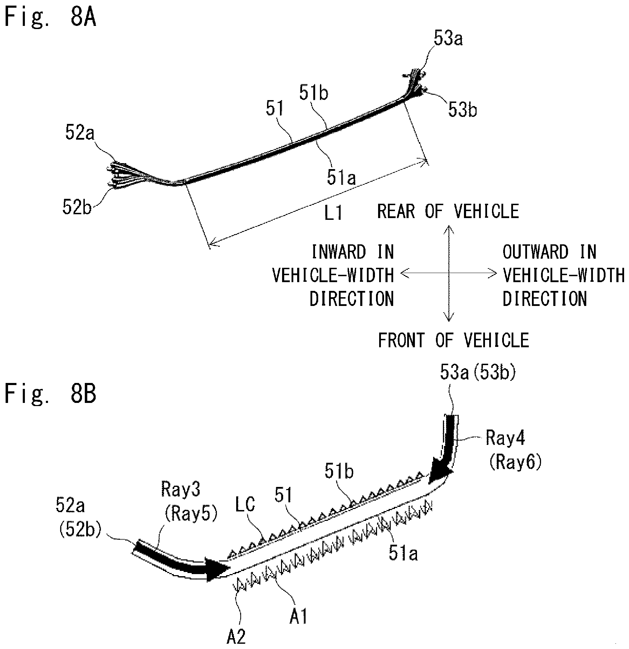

Fig. 8A is a perspective view of the outward illuminating lamp 50, and Fig. 8B is a diagram (a schematic diagram) of an optical path of a light guided in the outward illuminating lamp 50.

As illustrated in Fig. 8A, the outward illuminating lamp 50 includes a light-guide rod 51. The inner lens 60 is disposed in front of the outward illuminating lamp 50 (see Fig. 3).

An outer peripheral surface of the light-guide rod 51 includes a light-exit surface 51a (a front surface) oriented toward the front of the vehicle and a rear surface 51b opposite the light-exit surface 51a. The light-exit surface 51a is provided in a range indicated by the reference L1 in Fig. 8A. The light-guide rod 51 (the light-exit surface 51a) is disposed substantially parallel to the outer lens 20 (its rear surface) (see Fig. 4).

As illustrated in Fig. 8A, a light-entry portion 52a and a light-entry portion 52b are provided at an inner end of the light-guide rod 51 in the vehicle-width direction. The light-entry portion 52a receives a light from a first turn lamp light source (not illustrated), and the light-entry portion 52b receives a light from a first position lamp light source (not illustrated). In a similar manner, a light-entry portion 53a and a light-entry portion 53b are provided at an outer end of the light-guide rod 51 in the vehicle-width direction. The light-entry portion 53a receives a light from a second turn lamp light source (not illustrated), and the light-entry portion 53b receives a light from a second position lamp light source (not illustrated).

As illustrated in Fig. 8B, a plurality of structures are provided on the rear surface 51b of the light-guide rod 51, and the plurality of structures are configured to diffuse the lights from the respective light sources that have entered the light-guide rod 51 through the respective light-entry portions 52a, 52b, 53a, and 53b and been guided in the light-guide rod 51 and to cause the diffused lights to exit the light-guide rod 51 through the light-exit surface 51a. These structures are, for example, lens cuts, such as grooves. Hereinafter, these structures are referred to as lens cuts LC.

Although not illustrated, the inner lens 60 (see Fig. 3) is disposed in front of the light-guide rod 51 (the light-exit surface 51a), that is, disposed between the light-guide rod 51 and the outer lens 20.

The inner lens 60 is made of a transparent resin, such as acryl or polycarbonate. The inner lens 60 has a light-entry surface and a light-exit surface opposite the light-entry surface. The light-entry surface receives a light that has exited the light-guide rod 51 through the light-exit surface 51a, and the light that has entered through the light-entry surface exits through the light-exit surface. At least one of the light-entry surface and the light-exit surface of the inner lens 60 is subjected to a lens cut process, an emboss process, or the like, so that the light that exits the light-guide rod 51 through the light-exit surface 51a is diffused to appear to be uniformly luminous. The inner lens 60 is disposed between the light-guide rod 51 and the outer lens 20 with the light-entry surface of the inner lens 60 opposing the light-exit surface 51a of the light-guide rod 51 and with the light-exit surface of the inner lens 60 opposing the rear surface of the outer lens 20. The inner lens 60 disposed in this manner is exposed through an opening 71a formed in an extension 71 (see Fig. 3) and seen through the outer lens 20.

In the outward illuminating lamp 50 configured as described above, upon the first and second turn lamp light sources being turned on, a light Ray3 from the first turn lamp light source enters the light-guide rod 51 through the light-entry portion 52a and travels toward the outer end in the vehicle-width direction, as illustrated in Fig. 8B. Then, the light Ray3 traveling inside the light-guide rod 51 is internally reflected (diffusely reflected) by the lens cuts LC provided on the rear surface 51b of the light-guide rod 51, exits the light-guide rod 51 through the light-exit surface 51a, and illuminates mainly an area outward in the vehicle-width direction (see the diagonal arrows A1 pointing toward the lower right in Fig. 8B).

Meanwhile, a light Ray4 from the second turn lamp light source enters the light-guide rod 51 through the light-entry portion 53a and travels toward the inner end in the vehicle-width direction. Then, the light Ray4 traveling inside the light-guide rod 51 is internally reflected (diffusely reflected) by the lens cuts LC provided on the rear surface 51b of the light-guide rod 51, exits the light-guide rod 51 through the light-exit surface 51a, and illuminates mainly an area in front of the vehicle (see the downward pointing arrows A2 in Fig. 8B).

In this manner, the light that exits the light-guide rod 51 through the light-exit surface 51a (see the arrows A1 and A2 in Fig. 8B) is transmitted through the inner lens 60 and the outer lens 20 disposed to the front of the light-guide rod 51 and illuminates the range of the angle θ2 (see Fig. 5). The angle θ2 is a range of from 80 degrees outward to 30 degrees inward in the vehicle-width direction from the reference axis AX extending in the front-rear direction of the vehicle, as viewed from the above. It is to be noted that the angle θ2 is not limited to this range and may span any other range.

In a similar manner, in the outward illuminating lamp 50 configured as described above, upon the first and second position lamp light sources being turned on, a light Ray5 from the first position lamp light source enters the light-guide rod 51 through the light-entry portion 52b and travels toward the outer end in the vehicle-width direction, as illustrated in Fig. 8B. Then, the light Ray5 traveling inside the light-guide rod 51 is internally reflected (diffusely reflected) by the lens cuts LC provided on the rear surface 51b of the light-guide rod 51, exits the light-guide rod 51 through the light-exit surface 51a, and illuminates mainly an area outward in the vehicle-width direction (see the diagonal arrows A1 pointing toward the lower right in Fig. 8B).

Meanwhile, a light Ray6 from the second position lamp light source enters the light-guide rod 51 via the light-entry portion 53b and travels toward the inner end in the vehicle-width direction. Then, the light Ray6 traveling inside the light-guide rod 51 is internally reflected (diffusely reflected) by the lens cuts LC provided on the rear surface 51b of the light-guide rod 51, exits the light-guide rod 51 through the light-exit surface 51a, and illuminates mainly an area in front of the vehicle (see the downward pointing arrows A2 in Fig. 8B).

In this manner, the light that exits the light-guide rod 51 through the light-exit surface 51a (see the arrows A1 and A2 in Fig. 8B) is transmitted through the inner lens 60 and the outer lens 20 disposed to the front of the light-guide rod 51 and illuminates the range of the angle θ2 (see Fig. 5).

As described above, a turn lamp is implemented by the light from the turn lamp light source 41 of the inward illuminating lamp 40 that illuminates the range of the angle θ1 and the light from the turn lamp light sources of the outward illuminating lamp 50 that illuminates the range of the angle θ2.

In a similar manner, a position lamp is implemented by the light from the position lamp light source 42 of the inward illuminating lamp 40 that illuminates the range of the angle θ1 and the light from the position lamp light sources of the outward illuminating lamp 50 that illuminates the range of the angle θ2.

Next, a configuration example of the second lamp 70 will be described briefly.

The second lamp 70 functions as a headlamp. As illustrated in Fig. 3, the second lamp 70 includes a high-beam lamp unit (e.g., one high-beam lamp unit) and a low-beam lamp unit (e.g., three low-beam lamp units). The second lamp 70 may have any desired number of these lamp units. Known lamp units can be used for the high-beam lamp unit and the low-beam lamp unit, and thus descriptions thereof will be omitted. The periphery of each lamp unit is covered by the extension 71 serving as a decorative member. The extension 71 has the opening 71a, through which the inner lens 60 is exposed.

As described above, the present embodiment allows the size of the light-transmitting portion 81 formed in the grille end portion 80 to be reduced. This can improve the appearance of the grille end portion 80.

This is because, since the light from the turn lamp light source 41 and the light from the position lamp light source 42 are condensed by the inner lens 43, the size of the light-transmitting portion 81 of the grille end portion 80 through which the light from the turn lamp light source 41 and the light from the position lamp light source 42 are transmitted can be made smaller corresponding to the light from the condensed the turn lamp light source 41 and the position lamp light source 42, compared with the case where the light from the turn lamp light source 41 and the light from the position lamp light source 42 are not condensed.

Moreover, the present embodiment can prevent the lens and the light source from being visually recognized through the light transmission part in the front view.

A rationale behind this is that the inward illuminating lamp 40 is disposed behind the grille end portion 80 (the non-light-transmitting portion 82).

Moreover, according to the present embodiment, it is possible to suppress light from each of the light sources 41 and 42 from being radiated toward the front of the vehicle. That is, in a front view, it is possible to prevent the grill end portion 80 (the light-transmitting portion 81) from being visually recognized as emitting light. This can improve the appearance of the grille.

A rationale behind this is as follows. As illustrated in Fig. 4, the set of the light sources 41 and 42, the inner lens 43, and the light-transmitting portion 81 of the grille end portion 80 are disposed in this order toward the front of the vehicle and inward in the vehicle-width direction, and the lights Ray1 and Ray2 from the respective light sources 41 and 42 that have been transmitted sequentially through the inner lens 43 and the light-transmitting portion 81 illuminate an area in front of the vehicle and inward in the vehicle-width direction (e.g., the range indicated by the reference θ1 in Fig. 5) and thus do not illuminate an area in front of the vehicle (the area directly in front of the vehicle).

Moreover, the present embodiment can implement two lamp functions (e.g., a turn lamp function and a position lamp function) with the single light-transmitting portion 81.

A rationale behind this is as follows. As illustrated in Fig. 7, the first light-exit portion 43b through which the light from the turn lamp light source 41 exits and the second light-exit portion 43f through which the light from the position lamp light source 42 exits are disposed adjacent to each other, and the light Ray1 from the turn lamp light source 41 and the light Ray2 from the position lamp light source 42 are each condensed by the inner lens 43 (the first light-exit portion 43b and the second light-exit portion 43f) and transmitted through the single light-transmitting portion 81.

Moreover, the present embodiment makes it possible to illuminate an area in front of the vehicle and inward in the vehicle-width direction even when no lens cut is provided on the outer lens 20, since the lights Ray1 and Ray2 from the respective light sources 41 and 42 that have been transmitted sequentially through the inner lens 43 and the light-transmitting portion 81 illuminate an area in front of the vehicle and inward in the vehicle-width direction (e.g., the range indicated by the reference θ1 in Fig. 5).

Next, some modification examples will be described.

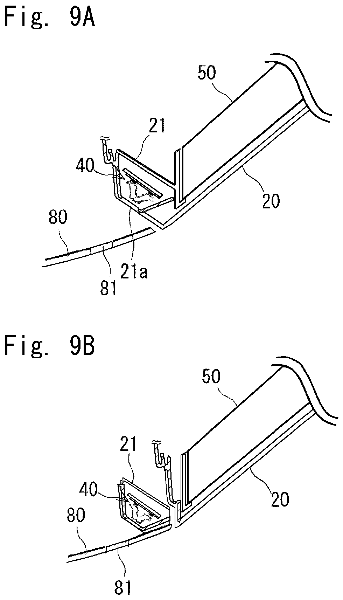

Figs. 9A and 9B illustrate some modification examples of the headlamp assembly 10.

As illustrated in Fig. 9A, the accommodating portion 21 (the light-transmitting portion 21a) may be formed along the outer lens 20.

Moreover, as illustrated in Fig. 9B, the accommodating portion 21 may be a member that is physically separate from the outer lens 20.

In the example described in the foregoing embodiment, the grille end portion 80 is attached to the outer lens 20, but this is not a limiting example. For example, the grille end portion 80 may be attached to another member (e.g., the housing 30), other than the outer lens 20, that constitutes the headlamp assembly 10. The grille end portion 80 may be formed integrally with the outer lens 20 or with another member (e.g., the housing 30), other than the outer lens 20, that constitutes the headlamp assembly 10. The grille end portion 80 may be a member that does not constitute the headlamp assembly 10 and may be attached to the vehicle V.

In the example described in the foregoing embodiment, the grille end portion 80 that is physically separate from the grille main body 90 (see Fig. 2) is used as an ornamental panel, but this is not a limiting example. For example, as an ornamental panel, a grille in which the grille end portion 80 and the grille main body 90 are integrated into a piece may be used. For example, a grille may be formed of a single panel made of a synthetic resin that includes the grille end portion 80 and the grille main body 90. Then, this grille that includes the grille end portion 80 and the grille main body 90 may be attached to the front end of the vehicle V. In this case, the grille end portion 80 of the headlamp assembly 10 may be omitted. This grille that includes the grille end portion 80 and the grille main body 90 serves as another example of an ornamental panel according to the present disclosure.

In the example described in the foregoing embodiment, the inward illuminating lamp 40 and the outward illuminating lamp 50 function as the position lamp and the turn lamp, but this is not a limiting example. For example, the inward illuminating lamp 40 and the outward illuminating lamp 50 may function only as the position lamp or only as the turn lamp. Moreover, the inward illuminating lamp 40 and the outward illuminating lamp 50 may function as a lamp that is neither the position lamp nor the turn lamp.

In the example described in the foregoing embodiment, the grille main body 90 does not include an air passage through which the air for cooling the radiator and so on passes, but this is not a limiting example. The grille main body 90 may include an air passage.

The modification examples described above can also provide advantageous effects similar to those provided by the foregoing embodiment.

The numerical values indicated in the foregoing embodiment are all examples, and it is needless to say that any other numerical values different from those stated above can also be used.

In any and all respect, the foregoing embodiment is merely an example. The present invention should not be construed as limiting based on the description of the foregoing embodiment. The present invention can be embodied in various other forms without departing from the scope of the present ivention which is defnined by the appended claims.

## Claims

1. A vehicle lamp (40), comprising:
a lens (43) disposed behind an ornamental panel (80) the ornamental panel (80) including a non-light-transmitting portion (82) and including a light-transmitting portion (81); and
a light source (41, 42) disposed behind the ornamental panel, the light source being configured to emit a light (Ray1, Ray2) that is to be transmitted sequentially through the lens and the light-transmitting portion and that is suitable to illuminate an area in front of a vehicle and inward in a vehicle-width direction, when the vehicle lamp is mounted in a vehicle, wherein
the lens is configured to condense the light from the light source that is transmitted through the lens,
the light source includes a first light source (41) that emits light of a first color and a second light source (42) that emits light of a second color,
the lens includes a first light-entry portion (43a) configured to receive the light from the first light source, a first light-exit portion (43b) through which the light from the first light source that has entered through the first light-entry portion exits, a first light-guide portion (43c,43d) configured to guide the light from the first light source that has entered through the first light-entry portion to the first light-exit portion and to cause the light to exit through the first light-exit portion, a second light-entry portion configured to receive the light from the second light source, a second light-exit portion (43f) through which the light from the second light source that has entered through the second light-entry portion exits, and a second light-guide portion (43g, 43h) configured to guide the light from the second light source that has entered through the second light-entry portion to the second light-exit portion and to cause the light to exit through the second light-exit portion,
**characterized in that**
when the vehicle lamp is mounted in the vehicle,
the first light-exit portion (43b) is configured to condense the light from the first light source (41) that exits through the first light-exit portion with respect to the horizontal direction to a first focal point (F43b) set between the first light-exit portion and the light-transmitting portion (81) and the first light-exit portion (43b) is designed to allow the light to exit through the first light-exit portion (43b) as a parallel light with respect to the vertical direction,
the second light-exit portion (43f) is configured to condense the light from the second light source (42) that exits through the second light-exit portion (81) with respect to the horizontal direction to a second focal point (F43f) set between the second light-exit portion and the light-transmitting portion and the second light-exit portion (43f) is designed to allow the light to exit through the second light-exit portion (43f) as a parallel light with respect to the vertical direction,
the first light-exit portion (43b) and the second light-exit portion (43f) are disposed adjacent to each other in the horizontal direction, and
the light-transmitting portion (81) has a size corresponding to the size of the light bundle from the first light source condensed by the first light-exit portion (43b) and the size of the light bundle from the second light source condensed by the second light-exit portion (43f).

2. The vehicle lamp according to Claim 1, wherein
the first light source (41) is a turn lamp light source,
the second light source (42) is a position lamp light source.

3. The vehicle lamp according to any one of Claims 1 to 2, wherein the vehicle lamp is suitable to be mounted to said vehicle comprising the ornamental panel, wherein the ornamental panel is a member that is physically separate from a grille main body (90) attached to a front end of the vehicle.

4. The vehicle lamp according to Claim 3, wherein the ornamental panel is attached to a headlamp assembly (10), the ornamental panel is arranged at a position adjacent to the grille body by mounting the headlamp assembly to the front end of the vehicle.

5. The vehicle lamp according to any one of Claims 1 to 2, wherein the vehicle lamp is suitable to be mounted to said vehicle comprising the ornamental panel, wherein the ornamental panel is formed integrally with a grille main body (90) attached to a front end of the vehicle.

6. The vehicle lamp according to any one of Claims 1 to 5, wherein the vehicle lamp is suitable to be mounted to said vehicle comprising the ornamental panel, wherein the ornamental panel is a grille portion constituting a grille along with a grille main body (90) attached to a front end of the vehicle.

## Patentansprüche

1. Fahrzeuglampe (40), die Folgendes aufweist:
eine Linse (43), die hinter einem Dekorationspaneel (80) angeordnet ist, wobei das Dekorationspaneel (80) einen nicht lichtdurchlässigen Teil (82) und einen lichtdurchlässigen Teil (81) aufweist, und
eine Lichtquelle (41, 42), die hinter dem Dekorationspaneel angeordnet ist, wobei die Lichtquelle konfiguriert ist, um ein Licht (Ray1, Ray2) zu emittieren, das sequentiell durch die Linse und den lichtdurchlässigen Teil hindurchlaufen soll und geeignet ist, um ein Bereich vor einem Fahrzeug und nach innen in einer Fahrzeugbreitenrichtung zu beleuchten, wenn die Fahrzeuglampe an einem Fahrzeug befestigt ist, wobei
die Linse konfiguriert ist, um das Licht von der Lichtquelle, welches durch die Linse hindurchgelassen wird, zusammenzuführen,
wobei die Lichtquelle eine erste Lichtquelle (41) aufweist, die Licht einer ersten Farbe emittiert, und eine zweite Lichtquelle (42), die Licht einer zweiten Farbe emittiert,
wobei die Linse einen ersten Lichteintrittsteil (43a) aufweist, der konfiguriert ist, um das Licht von der ersten Lichtquelle aufzunehmen, weiter einen ersten Lichtaustrittsteil (43b), durch welchen das Licht von der ersten Lichtquelle, welches durch den ersten Lichteintrittsteil eingetreten ist, austritt, einen ersten Lichtführungsteil (43c, 43d), der konfiguriert ist, um das Licht von der ersten Lichtquelle, welches durch den ersten Lichteintrittsteil eingetreten ist, zu dem ersten Lichtaustrittsteil zu führen und zu bewirken, dass das Licht durch den ersten Lichtaustrittsteil austritt, einen zweiten Lichteintrittsteil, der konfiguriert ist, um das Licht von der zweiten Lichtquelle aufzunehmen, weiter einen zweiten Lichtaustrittsteil (43f), durch welchen das Licht von der zweiten Lichtquelle, welches durch den zweiten Lichteintrittsteil eingetreten ist, austritt, und einen zweiten Lichtführungsteil (43g, 43h), der konfiguriert ist, um das Licht von der zweiten Lichtquelle, welches durch den zweiten Lichteintrittsteil eingetreten ist, zu dem zweiten Lichtaustrittsteil zu führen und zu bewirken, dass das Licht durch den zweiten Lichtaustrittsteil austritt,
**dadurch gekennzeichnet, dass**
wenn die Fahrzeuglampe an dem Fahrzeug befestigt ist,
der erste Lichtaustrittsteil (43b) konfiguriert ist, um das Licht von der ersten Lichtquelle (41), welches durch den ersten Lichtaustrittsteil austritt, bezüglich der horizontalen Richtung auf einen ersten Brennpunkt (F43b) zu zusammenzuführen, der zwischen dem ersten Lichtaustrittsteil und dem lichtdurchlässigen Teil (81) festgelegt ist, und dass der erste Lichtaustrittsteil (43b) ausgelegt ist, um zu gestatten, dass das Licht durch den ersten Lichtaustrittsteil (43b) als paralleles Licht bezüglich der vertikalen Richtung austritt,
der zweite Lichtaustrittsteil (43f) konfiguriert ist, um das Licht von der zweiten Lichtquelle (42), welches durch den zweiten Lichtaustrittsteil (81) austritt, bezüglich der horizontalen Richtung zu einem zweiten Brennpunkt (F43f) zu zusammenzuführen, der zwischen dem zweiten Lichtaustrittsteil und dem lichtdurchlässigen Teil festgelegt ist, und wobei der zweite Lichtaustrittsteil (43f) ausgelegt ist, um zu gestatten, dass das Licht durch den zweiten Lichtaustrittsteil (43f) als paralleles Licht bezüglich der vertikalen Richtung austritt,
der erste Lichtaustrittsteil (43b) und der zweite Lichtaustrittsteil (43f) benachbart zueinander in der horizontalen Richtung angeordnet sind, und
der lichtdurchlässige Teil (81) eine Größe entsprechend der Größe des Lichtbündels von der ersten Lichtquelle hat, das von dem ersten Lichtaustrittsteil (43b) zusammengeführt ist, und der Größe des Lichtbündels von der zweiten Lichtquelle, das durch den zweiten Lichtaustrittsteil (43f) zusammengeführt wurde.

2. Fahrzeuglampe nach Anspruch 1, wobei
die erste Lichtquelle (41) eine Abbiegelampenlichtquelle bzw. Blinker-Lichtquelle ist,
die zweite Lichtquelle (42) eine Positionslampenlichtquelle ist.

3. Fahrzeuglampe nach einem der Ansprüche 1 bis 2,
wobei die Fahrzeuglampe geeignet ist, um an dem Fahrzeug befestigt zu werden, welches das Dekorationspaneel aufweist, wobei das Dekorationspaneel ein Element ist, welches physisch von einem Grillhauptkörper (90) getrennt ist, der an einem vorderen Ende des Fahrzeugs angebracht ist.

4. Fahrzeuglampe nach Anspruch 3, wobei das Dekorationspaneel an einer Scheinwerferanordnung (10) befestigt ist, wobei das Dekorationspaneel an einer Position benachbart zu dem Grillkörper durch Befestigung der Scheinwerferanordnung an dem vorderen Ende des Fahrzeugs angeordnet ist.

5. Fahrzeuglampe nach einem der Ansprüche 1 bis 2,
wobei die Fahrzeuglampe geeignet ist, um an dem Fahrzeug befestigt zu werden, welches das Dekorationspaneel aufweist, wobei das Dekorationspaneel integral mit einem Grillhauptkörper (90) geformt ist, der an einem vorderen Ende des Fahrzeugs angebracht ist.

6. Fahrzeuglampe nach einem der Ansprüche 1 bis 5, wobei die Fahrzeuglampe zur Befestigung an dem Fahrzeug geeignet ist, welches das Dekorationspaneel aufweist, wobei das Dekorationspaneel ein Grillteil ist, der zusammen mit einem Grillhauptkörper (90), der an einem vorderen Ende des Fahrzeugs angebracht ist, einen Grill bildet.

## Revendications

1. Lampe de véhicule (40), comprenant :
une lentille (43) disposée derrière un panneau décoratif (80), le panneau décoratif (80) comportant une partie ne transmettant pas la lumière (82) et comportant une partie transmettant la lumière (81) ; et
une source de lumière (41, 42) disposée derrière le panneau décoratif, la source de lumière étant configurée pour émettre une lumière (Ray1, Ray2) qui doit être transmise séquentiellement à travers la lentille et la partie de transmission de lumière et qui est adaptée pour éclairer une zone devant un véhicule et vers l'intérieur dans une direction de largeur de véhicule, lorsque la lampe de véhicule est montée dans un véhicule, dans laquelle
la lentille est configurée pour condenser la lumière provenant de la source de lumière qui est transmise à travers la lentille,
la source de lumière comporte une première source de lumière (41) qui émet une lumière d'une première couleur et une deuxième source de lumière (42) qui émet une lumière d'une deuxième couleur,
la lentille comporte une première partie d'entrée de lumière (43a) configurée pour recevoir la lumière provenant de la première source de lumière, une première partie de sortie de lumière (43b) par laquelle sort la lumière provenant de la première source de lumière qui est entrée par la première partie d'entrée de lumière, une première partie de guide de lumière (43c, 43d) configurée pour guider la lumière provenant de la première source de lumière qui est entrée par la première partie d'entrée de lumière vers la première partie de sortie de lumière et pour amener la lumière à sortir par la première partie de sortie de lumière, une deuxième partie d'entrée de lumière configurée pour recevoir la lumière provenant de la deuxième source de lumière, une deuxième partie de sortie de lumière (43f) par laquelle sort la lumière provenant de la deuxième source de lumière qui est entrée par la deuxième partie d'entrée de lumière, et une deuxième partie de guide de lumière (43g, 43h) configurée pour guider la lumière provenant de la deuxième source de lumière qui est entrée par la deuxième partie d'entrée de lumière vers la deuxième partie de sortie de lumière et pour amener la lumière à sortir par la deuxième partie de sortie de lumière,
**caractérisée en ce que**, lorsque la lampe de véhicule est montée dans le véhicule,
la première partie de sortie de lumière (43b) est configurée pour condenser la lumière provenant de la première source de lumière (41) qui sort par la première partie de sortie de lumière selon la direction horizontale à un premier point focal (F43b) placé entre la première partie de sortie de lumière et la partie transmettant la lumière (81), et la première partie de sortie de lumière (43b) est conçue pour permettre à la lumière de sortir par la première partie de sortie de lumière (43b) sous forme d'une lumière parallèle à la direction verticale,
la deuxième partie de sortie de lumière (43f) est configurée pour condenser la lumière provenant de la deuxième source de lumière (42) qui sort par la deuxième partie de sortie de lumière (81) selon la direction horizontale à un deuxième point focal (F43f) placé entre la deuxième partie de sortie de lumière et la partie transmettant la lumière (81), et la deuxième partie de sortie de lumière (43f) est conçue pour permettre à la lumière de sortir par la deuxième partie de sortie de lumière (43f) sous forme d'une lumière parallèle à la direction verticale,
la première partie de sortie de lumière (43b) et la deuxième partie de sortie de lumière (43f) sont disposées adjacentes l'une à l'autre dans la direction horizontale, et
la partie transmettant la lumière (81) a une taille correspondant à la taille du faisceau de lumière provenant de la première source de lumière qui a été condensée par la première partie de sortie de lumière (43b) et à la taille du faisceau de lumière provenant de la deuxième source de lumière qui a été condensée par la deuxième partie de sortie de lumière (43f).

2. Lampe de véhicule selon la revendication 1, dans laquelle
la première source de lumière (41) est une source de lumière d'un feu clignotant,
la deuxième source de lumière (42) est une source de lumière d'un feu de position.

3. Lampe de véhicule selon l'une quelconque des revendications 1 à 2, dans laquelle la lampe de véhicule est adaptée à être montée sur ledit véhicule comprenant le panneau décoratif, dans laquelle le panneau décoratif est un élément qui est physiquement séparé d'un corps principal de calandre (90) fixé à une extrémité avant du véhicule.

4. Lampe de véhicule selon la revendication 3, dans laquelle le panneau décoratif est fixé à un ensemble de phare (10), le panneau décoratif est disposé à une position adjacente au corps de calandre en montant l'ensemble de phare à l'extrémité avant du véhicule.

5. Lampe de véhicule selon l'une quelconque des revendications 1 à 2, dans laquelle la lampe de véhicule est adaptée à être montée sur ledit véhicule comprenant le panneau décoratif, dans laquelle le panneau décoratif est formé d'un seul tenant avec un corps principal de calandre (90) fixé à une extrémité avant du véhicule.

6. Lampe de véhicule selon l'une quelconque des revendications 1 à 5, dans laquelle la lampe de véhicule est adaptée à être montée sur ledit véhicule comprenant le panneau décoratif, dans laquelle le panneau décoratif est une partie de calandre constituant une calandre avec un corps principal de calandre (90) fixé à une extrémité avant du véhicule.
